# FASCICULE DE BREVET EUROPEEN

(11) **EP 2 094 986 B1**
(45) Date de publication et mention de la délivrance du brevet: **15.09.2010**
(21) Numéro de dépôt: 07847793.2
(22) Date de dépôt: 04.12.2007
(51) Int. Cl.: F16D 3/38

(54) **DISPOSITIF DE LIAISON ENTRE UNE QUEUE DE PIGNON ET UNE CHAPE DE COLONNE DE DIRECTION**
VERBINDUNGSVORRICHTUNG ZWISCHEN EINER RITZELWELLE UND EINER LENKSÄULENKAPPE
LINKING DEVICE BETWEEN PINION SHAFT AND STEERING COLUMN CAP

(30) Priorité: 27.12.2006 FR 0611433
(43) Date de publication de la demande: 02.09.2009
(73) Titulaire: Renault S.A.S., 92100 Boulogne-Billancourt (FR)
(72) Inventeur: BRETON, Xavier, F-78280 Guyancourt (FR); LANARRE, Laurent, F-78170 La Celle Saint Cloud (FR)
(86) Numéro de dépôt international: PCT/EP2007/063293
(87) Numéro de publication internationale: WO 2008/080743

(56) Documents cités:
- EP-A1- 0 292 442
- DE-U1- 8 716 393
- US-A- 4 628 758

## Description

La présente invention concerne un dispositif de liaison entre une queue de pignon et une chape de colonne de direction, pour un système de commande de direction d'un véhicule, notamment automobile.

De manière bien connue, la queue de pignon, dont la rotation commande le braquage des roues, est reliée cinématiquement à la colonne de direction -qui est entraînée par le volant- via un ou plusieurs joints universels, où « de Cardan ».

Un tel joint est composé d'une paire de chapes reliées l'une à l'autre par un croisillon, ou « noix » de l'articulation.

Un agencement de ce genre est illustré par exemple sur la figure 1 du document US 4 628 758.

L'invention a pour objet la liaison de la queue de pignon, aussi bien en rotation qu'en translation, avec l'une des chapes d'une telle articulation.

Elle se rapporte, plus précisément, à une queue de pignon qui a une section usuellement désignée « en double D », car elle est pourvue d'une paire de méplats latéraux parallèles à son axe longitudinal, tandis que ladite chape de colonne de direction possède une partie réceptrice, dite première partie, ayant une paroi de section transversale sensiblement en forme de « U » ainsi conformée qu'elle peut être emboîtée sur ladite queue de pignon par un mouvement perpendiculaire, ou approximativement perpendiculaire, à son axe longitudinal, de sorte qu'après emboîtement ladite première partie de chape fait office de logement à la queue de pignon et en est solidaire en rotation, ces deux éléments étant pourvus en outre de moyens de blocage aptes à assurer, après emboîtement, leur immobilisation mutuelle en translation.

De manière classique, les moyens de blocage assurant l'immobilisation mutuelle en translation de la chape et de la queue de pignon comprennent une tige de serrage transversale, telle qu'une tige de vis ou de boulon notamment, apte à traverser une paire d'orifices coaxiaux disposés en vis-à-vis dans les faces internes de la paroi en forme de « U », et à passer dans une encoche creusée dans la paroi de la queue de pignon, lorsque l'encoche se trouve en regard desdits orifices.

Un montage de ce genre est représenté par exemple sur les figures 1A, 1B et 2 du document EP-A- 1 418 356. Le document EP-A1-0292442 révèle le préambule de la revendication 1.

Il présente le risque que, lorsque la chape n'est pas correctement positionnée, suivant la direction longitudinale, par rapport à la queue de pignon, le verrouillage transversal de ces deux éléments se fait difficilement ou, voire, ne se fait pas.

En effet, si les orifices de la chape ne se trouvent pas convenablement placés en regard de l'encoche, un repositionnement axial est nécessaire pour que la tige puisse être engagée dans ces orifices et puisse passer dans l'encoche.

Pire, si la queue de pignon n'est pas insérée sur une course axiale suffisante à l'intérieur de la première partie (partie réceptrice) de la chape, il y a un risque que la tige puisse être introduite à travers lesdits orifices, mais en passant au-delà de l'extrémité libre de la queue de pignon, sans interférer avec celle-ci et, par conséquent, sans passer dans l'encoche. Dans cette hypothèse, la plus défavorable, les deux éléments ne sont donc pas solidaires en translation, alors que l'opérateur peut estimer qu'ils le sont, puisque la tige est en place.

Ceci pose donc un problème de fiabilité du montage.

L'invention vise à résoudre ce problème.

A cet effet, le dispositif de l'invention est caractérisé en ce que, d'une part, ladite première partie de la chape se prolonge, du côté correspondant à l'extrémité libre de la queue de pignon, par une paire de joues planes et parallèles qui s'étendent longitudinalement dans le prolongement de ladite première partie, parallèlement aux faces internes de sa paroi en forme de « U », l'écartement mutuel des faces internes desdites joues étant plus grand que celui des faces internes de la paroi en forme de « U », et que, d'autre part, la queue de pignon est munie d'un appendice s'étendant coaxialement, sur une certaine longueur, au-delà de son extrémité libre, cet appendice étant muni à sa périphérie de moyens d'indexage faisant saillie sur un diamètre qui est inférieur ou égal à l'écartement mutuel des faces internes desdites joues, mais supérieur à celui des faces internes de la paroi en forme de « U », lesdits moyens d'indexage étant aptes à s'insérer dans l'espace situé entre lesdites joues au cours de la mise en place de la chape sur la queue de pignon, de manière à éviter le risque d'un mauvais positionnement relatif, en direction axiale, de la chape par rapport à la queue de pignon et, corrélativement, le risque d'un non blocage en translation de ces deux éléments.

Ainsi, il suffit à l'opérateur, une fois l'emboîtement réalisé, de déplacer légèrement (si nécessaire) en direction axiale la queue de pignon vers l'arrière, dans le sens de son extraction hors de la chape, par rapport à cette dernière -ou inversement de déplacer légèrement la chape vers l'avant par rapport à la queue de pignon- pour que les moyens d'indexage viennent en butée dans la zone de rétrécissement de la chape, assurant ainsi un positionnement relatif correct des deux éléments qui autorise leur verrouillage ultérieur en translation et empêche un retrait excessif de la queue de pignon, susceptible d'entraîner un non verrouillage.

Par ailleurs, selon un certain nombre de caractéristiques avantageuses, mais non limitatives, de l'invention :
- ledit appendice est cylindrique, coaxial à la queue de pignon, et de diamètre inférieur ou égal à l'écartement mutuel desdits méplats ;
- ledit appendice forme partie intégrante de la queue de pignon ;
- ledit appendice est un élément rapporté emmanché dans une ouverture ménagée dans la face frontale constituant l'extrémité libre de la queue de pignon ;
- ledit appendice est un élément en matière plastique ;
- les moyens d'indexage consistent en un disque, par exemple en un circlips, monté dans une gorge ménagée dans ledit appendice ;
- les moyens d'indexage s'inscrivent à l'intérieur d'un espace entourant ledit appendice, qui est délimité par une enveloppe virtuelle en forme de tronc de cône droit, dont le sommet est tourné vers la queue de pignon et situé sur l'axe de celui-ci ce tronc de cône ayant une grande base coplanaire à la face frontale de l'appendice et une petite base coplanaire à la face d'extrémité libre de la queue de pignon, au-delà de laquelle s'étend l'appendice ;
- l'enveloppe virtuelle en forme de tronc de cône droit, dont le sommet possède une grande base dont le diamètre est inférieur ou égal à l'écartement mutuel des faces internes desdites joues, et une petite base dont le diamètre est supérieur ou égal à l'écartement mutuel des faces internes de la paroi en forme de « U » ;
- lesdits moyens de blocage aptes à assurer, après emboîtement, l'immobilisation mutuelle en translation de la chape et de la queue de pignon comprennent une tige de serrage transversale, telle qu'une tige de vis ou de boulon notamment, apte à traverser une paire d'orifices coaxiaux disposés en vis-à-vis dans les faces internes de la paroi en forme de « U », et à passer dans une encoche creusée dans la paroi de la queue de pignon, lorsque l'encoche se trouve en regard desdits orifices.

D'autres caractéristiques et avantages de la présente invention apparaîtront à la lecture de la description détaillée qui va suivre, et en regard des dessins annexés, donnés à titre d'exemples non limitatifs et sur lesquels :
La figure 1 et 2 sont des vues en perspective, respectivement, de la queue de pignon et de la chape constitutifs d'un dispositif selon l'invention.
La figure 3 est une vue de côté schématique de la queue de pignon de la figure 1, cette vue étant destinée à montrer la zone dans laquelle sont placés les moyens d'indexage.
La figure 4 est une section de cette queue de pignon vue dans un plan de coupe référencé IV-IV sur la figure 3.
La figure 5 est une vue en coupe de moyens d'indexage constitués par un circlips, le plan de coupe portant la référence V-V sur la figure 6.
La figure 6 est une vue similaire à la figure 3, montrant une queue de pignon dont les moyens d'indexage sont constitués par un circlips.
Les figures 7 et 8 sont des vues de côté schématiques (partiellement en coupe) qui montrent l'assemblage d'une chape sur une queue de pignon.
La figure 9 est une vue de dessus (partiellement en coupe) de la figure 8.

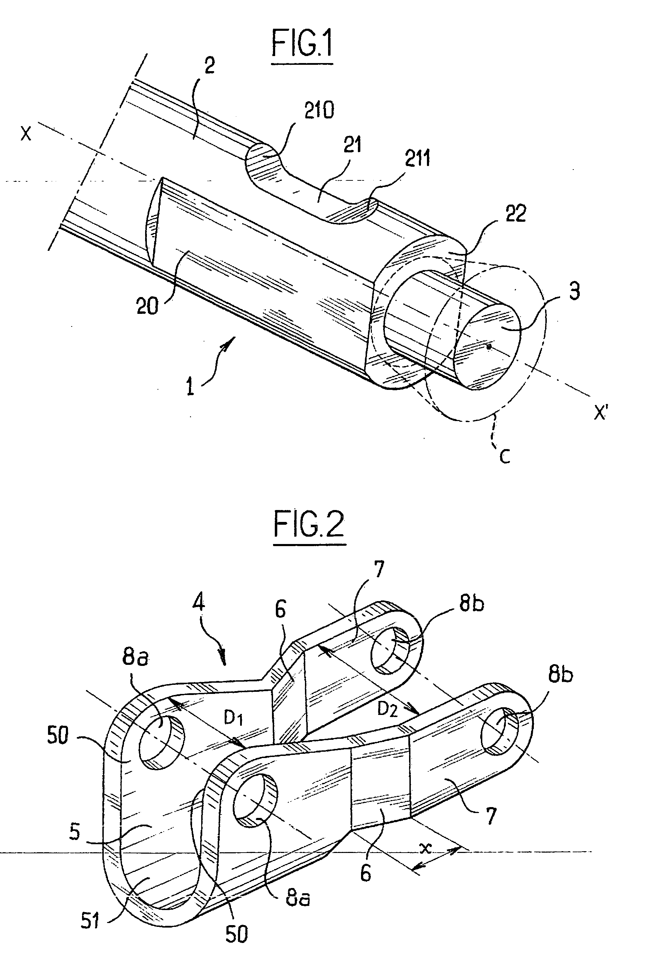

La queue de pignon 1 illustrée sur la figure 1 comprend une extrémité d'arbre 2 de forme générale cylindrique, d'axe X-X', qui se prolonge par un appendice cylindrique 3 coaxial au-delà de son extrémité libre, matérialisée par sa face frontale 22.

Dans cette portion d'extrémité, et jusque ladite face frontale 22, l'arbre 2 possède une paire de méplats 20, diamétralement opposés, parallèles à l'axe X-X'. Dans cette même portion, à la périphérie de sa partie cylindrique, est creusée une encoche 21, de profondeur constante, qui s'étend sur une certaine longueur d'arbre et présente des extrémités arrondies 210, 211, sensiblement semi cylindriques. L'encoche 21 se trouve à mi distance angulaire des deux méplats 20, dirigée vers le haut par exemple si les méplats sont disposés verticalement, comme sur la figure 1.

Sur cette dernière, la ligne en traits interrompus désignée C représente une enveloppe fictive tronconique à l'intérieur de laquelle se positionnent les moyens d'indexage, comme cela sera expliqué plus loin.

La chape 4, illustrée sur la figure 2, possède une première partie 5 de section en U, présentant un fond semi cylindrique 51, de même diamètre que celui de l'arbre 2, ainsi que des parois latérales dont les faces internes 50 sont espacées d'une valeur D1 égale (au jeu d'emboîtement près) à l'écartement mutuel des méplats 20.

Sa section est donc conformée pour permettre l'emboîtement et la retenue de la portion d'extrémité d'arbre 2, et leur solidarisation en rotation par appui des méplats 20 contre les faces 50.

Les flancs de cette partie 5 sont percés par une paire de trous circulaires 8a, en vis-à-vis l'un de l'autre selon la direction transversale, et de même diamètre que celui des bords semi cylindriques 210 et 211 de l'encoche 21. Ces trous sont ainsi positionnés qu'ils débouchent en regard, et à fleur, de ladite encoche 21 lorsque l'arbre 2 est correctement emboîté dans la partie de chape 4.

La partie 5 se prolonge d'un côté par une paire de joues planes 7 formant les ailes d'une chape, et dont les faces internes sont écartées l'une de l'autre d'une distance D2 plus grande que D1.

Les joues 7 sont parallèles aux flancs latéraux de la partie 5 et se raccordent à cette dernière par des portions intermédiaires 6 planes et obliques.

Ces joues sont percées d'une paire de trous circulaires 8b qui, tout comme les trous 8a, sont positionnés en vis-à-vis l'un de l'autre selon la direction transversale.

Les trous 8b sont destinés à recevoir l'une des deux parties du croisillon (non représenté) formant la noix du joint universel auquel la queue de pignon doit être reliée.

La chape 2 a une forme symétrique par rapport à un plan longitudinal médian, dans lequel se place l'axe X-X' lorsque la queue de pignon est mise en place dans la chape.

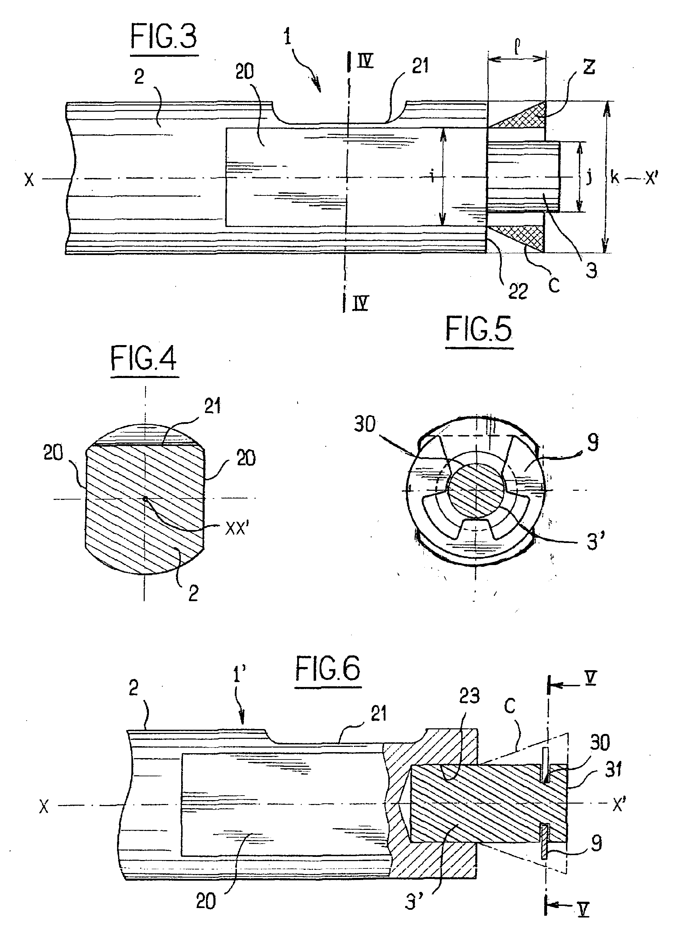

En référence à la figure 3, la zone hachurée Z représente l'espace délimité par le tronc de cône C, entourant l'appendice 3, à l'intérieur duquel font saillie les organes constitutifs des moyens d'indexage.

Sur cette figure :
- la référence i désigne la largeur des méplats 20 ;
- la référence j désigne la longueur de l'appendice 3;
- la référence l désigne la longueur de la zone Z ;
- la référence k désigne le diamètre de la grande base de la zone Z. Cette zone a une petite base de diamètre i, égal à la largeur des méplats 20.

Avantageusement la longueur l est égale ou voisine de la longueur de l'appendice.

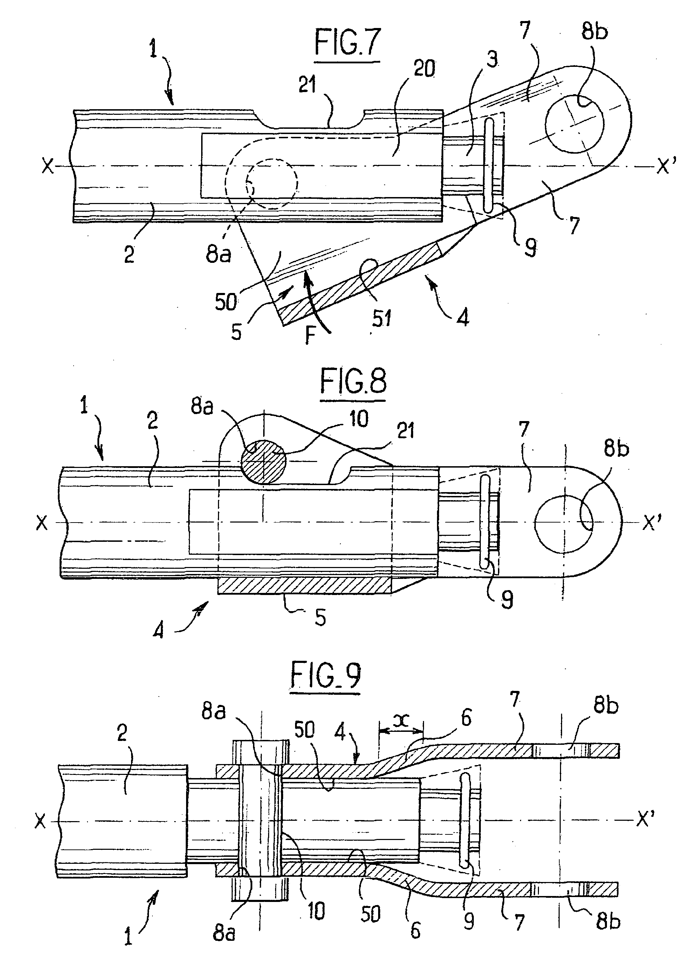

Cette longueur est au moins égale, et de préférence supérieure, à la dimension axiale x (voir figures 2 et 9) des portions obliques intermédiaires de la chape.

Les moyens d'indexage consistent avantageusement en un organe annulaire, ou approximativement annulaire, qui est monté sur l'appendice 3 et fait saillie dans l'espace Z.

Cet appendice peut faire partie intégrante de l'arbre 2, l'ensemble étant par exemple obtenu par usinage d'une barre métallique.

L'appendice 3 peut être l'extrémité de la barre de torsion dans le cas d'un système hydraulique d'assistance de direction.

Dans le mode de réalisation de queue de pignon illustré sur les figures 5 et 6, l'appendice, désigné 3', est un élément en matière plastique qui, tel un bouchon, est inséré dans un alésage récepteur 23 percé en bout d'arbre ; la liaison peut être réalisée par emmanchement à force et/ou collage notamment. Cet appendice 3' présente une gorge 30 (rainure annulaire) creusée à sa périphérie à proximité de sa face d'extrémité libre 31, et adaptée pour servir de logement à un circlips 9, lequel constitue ici les moyens d'indexage du dispositif.

Son diamètre externe est tel qu'il demeure à l'intérieur de l'espace correspondant à la zone Z précitée, à l'intérieur du tronc de cône C.

Les figures 7 à 9 montrent comment se fait le montage de la chape 4 à l'extrémité de la queue de pignon 1. On suppose ce dernier fixe, et la chape mobile. L'inverse est évidemment possible.

Par convention, et pour simple commodité de l'explication, on considérera que le côté avant du dispositif se trouve vers la droite de ces figures, son côté arrière se trouvant par conséquent sur la gauche.

L'encoche 21 est supposée tournée vers le haut, les méplats 20 étant verticaux.

L'opérateur approche la chape de la queue de pignon, vers l'arrière, dans une position inclinée représentée sur la figure 7, l'ouverture de la première partie 5, de section en forme de U, de la chape 4 étant dirigée vers le haut, avec ses faces 50 sensiblement verticales. Durant cette approche, il positionne le circlips 9 dans la partie avant de la chape, entre les joues 7.

On notera que la présence du circlips 9, dont le diamètre est supérieur à l'écartement entre les faces 50 de la chape 4, fait qu'il n'est pas possible de positionner cette chape trop vers l'avant, le circlips ne pouvant pas s'insérer dans la première partie 5 de la chape.

L'opérateur fait ensuite pivoter la chape 5 vers le haut, de manière à ce que cette partie 5 de la chape s'adapte sur la portion d'extrémité avant de la queue de pignon, comme symbolisé par la flèche F sur la figure 7.

La chape s'aligne ainsi avec la queue de pignon, et ces deux éléments sont solidaires en rotation grâce à la coopération des méplats avec les faces 50.

Du fait que la chape, grâce à la présence du circlips 9, n'est pas positionnée trop en arrière, les trous 8a se trouvent forcément en regard de l'encoche 21.

La liaison en translation des deux éléments peut ainsi être réalisée de manière sûre, de manière classique, au moyen d'une tige de serrage transversale 10 (tige de vis ou de boulon).

En l'absence du circlips 9, se présenterait le risque d'un positionnement trop en avant de la chape, pouvant entraîner un passage « dans le vide » de cette tige, au delà de l'extrémité libre de la queue de pignon, en avant de celui-ci.

Si, au départ, la chape a été positionnée trop en arrière par rapport à la queue de pignon, de sorte que les trous 8a se trouvent en regard d'une partie pleine de l'arbre 2 (en arrière de l'encoche 21), il suffit de déplacer la chape légèrement vers l'avant pour obtenir un positionnement correct. Durant ce mouvement, il n'y a pas de risque que ce déplacement soit excessif, car sinon le circlips 9 vient en butée contre les flancs inclinés 6 de la chape, limitant automatiquement l'amplitude du déplacement à une valeur acceptable.

Ainsi toute erreur de montage est empêchée.

## Revendications

1. Dispositif de liaison entre une queue de pignon (1) et une chape de colonne de direction (4), pour un système de commande de direction d'un véhicule, ladite queue de pignon (1) étant pourvue d'une paire de méplats latéraux (20) parallèles à son axe longitudinal (X-X'), tandis que ladite chape de colonne de direction (4) possède une partie réceptrice (5), dite première partie, ayant une paroi de section transversale sensiblement en forme de « U » ainsi conformée qu'elle peut être emboîtée sur ladite queue de pignon (1) par un mouvement perpendiculaire, ou approximativement perpendiculaire, à son axe longitudinal (X-X'), de sorte qu'après emboîtement ladite première partie de chape (5) fait office de logement à la queue de pignon (1) et en est solidaire en rotation, ces deux éléments étant pourvus en outre de moyens de blocage (21, 8a, 10) aptes à assurer, après emboîtement, leur immobilisation mutuelle en translation, , , ladite première partie (5) de la chape se prolonge, du côté correspondant à l'extrémité libre de la queue de pignon, par une paire de joues planes et parallèles (7) qui s'étendent longitudinalement dans le prolongement de ladite première partie (5), parallèlement aux faces internes (50) de sa paroi en forme de « U », l'écartement mutuel (D2) des faces internes desdites joues (7) étant plus grand que celui (D1) des faces internes (50) de la paroi en forme de « U », la queue de pignon (1) est munie d'un appendice (3) s'étendant coaxialement, sur une certaine longueur, au-delà de son extrémité libre (22), cet appendice (3) étant muni à sa périphérie des moyens d'indexage (9) faisant saillie sur un diamètre qui est inférieur ou égal à l'écartement mutuel (D2) des faces internes desdites joues (7) **caractérisé en ce que** le diamètre des moyens d'indexage est supérieur à celui (D1) des faces internes de la paroi en forme de « U », lesdits moyens d'indexage (9) étant aptes à s'insérer dans l'espace situé entre lesdites joues (7) au cours de la mise en place de la chape (4) sur la queue de pignon (1), de manière à éviter le risque d'un mauvais positionnement relatif, en direction axiale, de la chape par rapport à la queue de pignon et, corrélativement, le risque d'un non blocage en translation de ces deux éléments (4, 1).

2. Dispositif selon la revendication 1, **caractérisé en ce que** ledit appendice (3 ; 3') est cylindrique, coaxial à la queue de pignon (1), et de diamètre inférieur ou égal à l'écartement mutuel desdits méplats (20).

3. Dispositif selon la revendication 1 ou 2, **caractérisé en ce que** ledit appendice (3) forme partie intégrante de la queue de pignon (1).

4. Dispositif selon la revendication 1 ou 2, **caractérisé en ce que** ledit appendice (3') est un élément rapporté, emmanché dans une ouverture (23) ménagée dans la face frontale (22) constituant l'extrémité libre de la queue de pignon (1).

5. Dispositif selon la revendication 4, **caractérisé en ce que** ledit appendice (3) est un élément en matière plastique.

6. Dispositif selon quelconque des revendications précédentes, **caractérisé en ce que** les moyens d'indexage consistent en un disque, par exemple en un circlips (9) monté dans une gorge (30) ménagée dans ledit appendice.

7. Dispositif selon l'une quelconque des revendications précédentes, **caractérisé en ce que** les moyens d'indexage s'inscrivent à l'intérieur d'un espace (7) entourant ledit appendice, qui est délimité par une enveloppe virtuelle (C) en forme de tronc de cône droit, dont le sommet est tourné vers la queue de pignon (1) et situé sur l'axe (X-X') de celui-ci ce tronc de cône ayant une grande base coplanaire avec la face frontale (22) de l'appendice (3) et une petite base coplanaire avec la face d'extrémité libre (22) de la queue de pignon (1), au-delà de laquelle s'étend l'appendice (3).

8. Dispositif selon la revendication 7, **caractérisé en ce** l'enveloppe virtuelle en forme de tronc de cône droit (C) possède une grande base dont le diamètre est inférieur ou égal à l'écartement mutuel (D2) des faces internes desdites joues (7), et une petite base dont le diamètre est supérieur ou égal à l'écartement mutuel (D1) des faces internes (50) de la paroi en forme de « U » .

9. Dispositif selon l'une quelconque des revendications précédentes, **caractérisé en ce que** lesdits moyens de blocage aptes à assurer, après emboîtement, l'immobilisation mutuelle en translation de la chape (4) et de la queue de pignon (1) comprennent une tige de serrage transversale (10), telle qu'une tige de vis ou de boulon notamment, apte à traverser une paire d'orifices coaxiaux (8a) disposés en vis-à-vis dans les faces internes (50) de la paroi en forme de « U », et à passer dans une encoche (21) creusée dans la paroi de la queue de pignon (1), lorsque l'encoche (21) se trouve en regard desdits orifices (8a).

## Claims

1. Link device between a pinion shaft (1) and a steering column clevis (4), for a steering control system of a vehicle, said pinion shaft (1) being provided with a pair of lateral flaps (20) parallel to its longitudinal axis (X-X'), while said steering column clevis (4) has a receiving part (5), called first part, having a wall of substantially U-shaped transverse cross section configured so that it can be fitted on said pinion shaft (1) by a movement that is perpendicular, or approximately perpendicular, to its longitudinal axis (X-X'), so that, when fitted, said first clevis portion (5) serves as a housing for said pinion shaft (1) and is joined thereto in rotation, these two elements also being provided with blocking means (21, 8a, 10) capable, after fitting, of ensuring their mutual immobilization in translation, said first portion (5) of the clevis being extended, on the side corresponding to the free end of the pinion shaft, by a pair of flat, parallel cheeks (7) which extend longitudinally in the extension of said first portion (5), parallel to the internal faces (50) of its U-shaped wall, the distance (D2) between the internal faces of said cheeks (7) being greater than that (D1) between the internal faces (50) of the U-shaped wall, the pinion shaft (1) being provided with an appendix (3) extending coaxially, over a certain length, beyond its free end (22), this appendix (3) being provided at its edge with indexing means (9) projecting over a diameter that is less than or equal to the distance (D2) between the internal faces of said cheeks (7), **characterized in that** the diameter of the indexing means is greater than that (D1) between the internal faces of the U-shaped wall, said indexing means (9) being capable of being inserted into the space between said cheeks (7) during the mounting of the clevis (4) on the pinion shaft (1), so as to avoid the risk of a relative axial mispositioning of the clevis relative to the pinion shaft and, correlatively, the risk of a non-blockage in translation of these two elements (4, 1).

2. Device according to Claim 1, **characterized in that** said appendix (3; 3') is cylindrical, coaxial to the pinion shaft (1), and of a diameter that is less than or equal to the distance between said flaps (20).

3. Device according to Claim 1 or 2, **characterized in that** said appendix (3) forms an integral part of the pinion shaft (1).

4. Device according to Claim 1 or 2, **characterized in that** said appendix (3') is an add-on element, fitted into an opening (23) provided in the front face (22) forming the free end of the pinion shaft (1).

5. Device according to Claim 4, **characterized in that** said appendix (3) is an element made of plastic material.

6. Device according to any one of the preceding claims, **characterized in that** the indexing means consist of a disk, for example of a circlip (9), mounted in a groove (30) provided in said appendix.

7. Device according to any one of the preceding claims, **characterized in that** the indexing means are inscribed inside a space (7) surrounding said appendix, which is delimited by a virtual envelope (C) in the form of a straight truncated cone, the summit of which faces toward the pinion shaft (1) and is situated on the axis (X-X') of the latter, this truncated cone having a large base coplanar with the front face (22) of the appendix (3) and a small base coplanar with the free end face (22) of the pinion shaft (1), beyond which the appendix (3) extends.

8. Device according to Claim 7, **characterized in that** the virtual envelope in the shape of a straight truncated cone (C) has a large base, the diameter of which is less than or equal to the distance (D2) between the internal faces of said cheeks (7), and a small base, the diameter of which is greater than or equal to the distance (D1) between the internal faces (50) of the U-shaped wall.

9. Device according to any one of the preceding claims, **characterized in that** said blocking means capable, after fitting, of ensuring the mutual immobilization in translation of the clevis (4) and of the pinion shaft (1) comprise a transversal tie rod (10), such as a screw stud or bolt in particular, capable of passing through a pair of coaxial orifices (8a) arranged opposite in the internal faces (50) of the U-shaped wall, and of passing into a notch (21) hollowed out in the wall of the pinion shaft (1), when the notch (21) is facing said orifices (8a).

## Patentansprüche

1. Verbindungsvorrichtung zwischen einer Ritzelwelle (1) und einem Lenksäule-Gabelgelenk (4) für ein Lenksteuersystem eines Fahrzeugs, wobei die Ritzelwelle (1) mit einem Paar von seitlichen Abflachungen (20) parallel zu ihrer Längsachse (X-X') versehen ist, während das Lenksäule-Gabelgelenk (4) einen Aufnahmeteil (5), erster Teil genannt, besitzt, der eine Wand mit einem Querschnitt im Wesentlichen in Form eines "U" hat, die so gestaltet ist, dass sie auf die Ritzelwelle (1) durch eine zu ihrer Längsachse (X-X') lotrechte oder in etwa lotrechte Bewegung aufgesteckt werden kann, derart, dass nach dem Aufstecken der erste Gabelgelenkteil (5) als Sitz für die Ritzelwelle (1) dient und damit in Drehung fest verbunden ist, wobei diese zwei Elemente außerdem mit Sperreinrichtungen (21, 8a, 10) versehen sind, die nach dem Aufstecken ihre gegenseitige Blockierung in Translationsrichtung gewährleisten können, wobei der erste Teil (5) des Gabelgelenks sich auf der dem freien Ende der Ritzelwelle entsprechenden Seite in einem Paar von ebenen und parallelen Wangen (7) verlängert, die sich in Längsrichtung in der Verlängerung des ersten Teils (5) parallel zu den Innenseiten (50) seiner "U"-förmigen Wand erstrecken, wobei der gegenseitige Abstand (D2) der Innenseiten der Wangen (7) größer ist als derjenige (D1) der Innenseiten (50) der "U"-förmigen Wand, wobei die Ritzelwelle (1) mit einem Fortsatz (3) versehen ist, der sich koaxial über eine gewisse Länge über ihr freies Ende (22) hinaus erstreckt, wobei dieser Fortsatz (3) an seinem Umfang mit Indexiereinrichtungen (9) versehen ist, die auf einem Durchmesser vorstehen, der geringer als der oder gleich dem gegenseitigen Abstand (D2) der Innenseiten der Wangen (7) ist, **dadurch gekennzeichnet, dass** der Durchmesser der Indexiereinrichtungen größer ist als derjenige (D1) der Innenseiten der "U"-förmigen Wand, wobei die Indexiereinrichtungen (9) sich während des Einsetzens des Gabelgelenks (4) auf die Ritzelwelle (1) in den zwischen den Wangen (7) befindlichen Raum einfügen können, um die Gefahr einer schlechten Positionierung des Gabelgelenks bezüglich der Ritzelwelle in axialer Richtung und korrelativ die Gefahr eines Nichtsperrens dieser zwei Elemente (4, 1) in Translationsrichtung zu vermeiden.

2. Vorrichtung nach Anspruch 1, **dadurch gekennzeichnet, dass** der Fortsatz (3; 3') zylindrisch und koaxial zur Ritzelwelle (1) ist und einen Durchmesser geringer als der oder gleich dem gegenseitigen Abstand der Abflachungen (20) hat.

3. Vorrichtung nach Anspruch 1 oder 2, **dadurch gekennzeichnet, dass** der Fortsatz (3) integrierender Bestandteil der Ritzelwelle (1) ist.

4. Vorrichtung nach Anspruch 1 oder 2, **dadurch gekennzeichnet, dass** der Fortsatz (3') ein angesetztes Element ist, das in eine Öffnung (23) eingeschoben ist, die in der das freie Ende der Ritzelwelle (1) bildenden Stirnseite (22) ausgespart ist.

5. Vorrichtung nach Anspruch 4, **dadurch gekennzeichnet, dass** der Fortsatz (3) ein Element aus Kunststoff ist.

6. Vorrichtung nach einem der vorhergehenden Ansprüche, **dadurch gekennzeichnet, dass** die Indexiereinrichtungen aus einer Scheibe bestehen, zum Beispiel aus einem Klemmring (9), der in eine im Fortsatz ausgesparte Rille (30) montiert ist.

7. Vorrichtung nach einem der vorhergehenden Ansprüche, **dadurch gekennzeichnet, dass** die Indexiereinrichtungen innerhalb eines den Fortsatz umgebenden Raums (7) liegen, der von einer virtuellen Hülle (C) in Form eines geraden Kegelstumpfs begrenzt wird, dessen Scheitel zur Ritzelwelle (1) weist und sich auf deren Achse (X-X') befindet, wobei dieser Kegelstumpf eine große Basis koplanar zur Stirnseite (22) des Fortsatzes (3) und eine kleine Basis koplanar zum freien Ende (22) der Ritzelwelle (1) hat, über das hinaus sich der Fortsatz (3) erstreckt.

8. Vorrichtung nach Anspruch 7, **dadurch gekennzeichnet, dass** die virtuelle Hülle in Form eines geraden Kegelstumpfs (C) eine große Basis, deren Durchmesser geringer als der oder gleich dem gegenseitigen Abstand (D2) der Innenseiten der Wangen (7) ist, und eine kleine Basis besitzt, deren Durchmesser größer als der oder gleich dem gegenseitigen Abstand (D1) der Innenseiten (50) der "U"-förmigen Wand ist.

9. Vorrichtung nach einem der vorhergehenden Ansprüche, **dadurch gekennzeichnet, dass** die Sperreinrichtungen, die nach dem Aufstecken die gegenseitige Blockierung des Gabelgelenks (4) und der Ritzelwelle (1) in Translationsrichtung gewährleisten können, einen Querklemmmschaft (10) wie insbesondere einen Schrauben- oder Bolzenschaft enthalten, der ein Paar von koaxialen Öffnungen (8a) durchqueren kann, die einander gegenüber in den Innenseiten (50) der "U"-förmigen Wand angeordnet sind, und durch eine in der Wand der Ritzelwelle (1) ausgehöhlte Kerbe (21) gehen kann, wenn die Kerbe (21) sich gegenüber den Öffnungen (8a) befindet.
